# EUROPEAN PATENT SPECIFICATION

(11) **EP 2 798 605 B1**
(45) Date of publication and mention of the grant of the patent: **30.08.2017**
(21) Application number: 11878331.5
(22) Date of filing: 27.12.2011
(51) Int. Cl.: G06Q 50/10, G06Q 30/02, H04L 29/08, H04L 12/26

(54) **METHOD, DEVICE, AND SYSTEM FOR GENERATING AND ANALYZING DIGITAL READABLE MEDIA CONSUMPTION DATA**
VERFAHREN, VORRICHTUNG UND SYSTEM ZUR ERZEUGUNG UND ANALYSE DIGITAL LESBARER MEDIENVERBRAUCHSDATEN
PROCÉDÉ, DISPOSITIF ET SYSTÈME DE GÉNÉRATION ET D'ANALYSE DE DONNÉES DE CONSOMMATION MULTIMÉDIA LISIBLES NUMÉRIQUEMENT

(43) Date of publication of application: 05.11.2014
(73) Proprietor: Intel Corporation, Santa Clara, CA 95054 (US)
(72) Inventor: NEEDHAM, Bradford, North Plains, Oregon 97133 (US)
(74) Representative: Rummler, Felix
(86) International application number: PCT/US2011/067385
(87) International publication number: WO 2013/100904

(56) References cited:
- KR-A- 20100 066 862
- US-A1- 2003 210 226
- US-A1- 2006 282 797
- US-A1- 2006 282 797
- US-A1- 2011 087 955
- US-A1- 2011 191 710
- US-A1- 2011 196 711
- US-B1- 6 947 922

## Description

### BACKGROUND

The consumption of media is quickly shifting from physical media to digital media. In fact, digital readers are becoming ubiquitous and are used to access and consume digital media such as digital books and other digital readable media. Such digital readable media may be purchased, downloaded, or otherwise accessed from a remote content server. To do so, a user may operate the digital reader to access the content server to review the digital media offered for sale or download. Many content servers provide some form of a recommendation service, which may be embodied as a recommendation of new or additional digital readable media in which the user may be interested. Such recommendations are typically based on the user's past purchases (e.g., a digital book similar to a previously purchased digital book) or based on other users' reviews. Of course, not all users take the time to draft such reviews. Additionally, the reviews may be provided by users who did not read or did not complete the digital readable media or have tastes/likes/dislikes of digital readable media different from the current user. Further, the recommendations provided by the content server may fail to provide the specific information desired by the user in making a selection of new digital readable media. US6947922B1, US2006/282797A1 and US2003/210226 disclose subject-matter relating to the features in the preamble of the independent claims. US2011/087955A1 discloses features relating to certain sub-features in claims 2, 4 and 9.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements lor clarity. Further, where considered appropriate, reference labels have been repeated among the figures to indicate corresponding or analogous elements.
FIG. 1 is a simplified block diagram of at least one embodiment of a system for generating and analyzing digital readable media consumption data;
FIG. 2 is a simplified block diagram of at least one embodiment a software environment of a digital reader of the system of FIG. 1;
FIG. 3 is a simplified flow diagram of at least one embodiment of a method for generating media consumption data that may be executed by the digital reader of FIG. 2;
FIG. 4 is a simplified flow diagram of at least one embodiment of a method for updating reading behavior statistics that may be executed by a media server of the system of FIG. 1; and
FIG. 5 is a simplified flow diagram of at least one embodiment of a method for identifying digital readable media for a user that may be executed by the media server of the system of FIG. 1.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the intention is to cover all modifications, equivalents, and alternatives falling within the spirit and scope of the invention as defined by the appended claims.

In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present disclosure. It will be appreciated, however, by one skilled in the art that embodiments of the disclosure may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Embodiments of the invention may be implemented in hardware, firmware, software, or any combination thereof. Embodiments of the invention implemented in a computer system may include one or more bus-based interconnects between components and/or one or more point-to-point interconnects between components. Embodiments of the invention may also be implemented as instructions carried by or stored on a transitory or non-transitory machine-readable medium, which may be read and executed by one or more processors. A machine-readable medium may be embodied as any device, mechanism, or physical structure for storing or transmitting information in a form readable by a machine (e.g., a computing device). For example, a machine-readable medium may be embodied as read only memory (ROM); random access memory (RAM); magnetic disk storage media; optical storage media; flash memory devices; mini- or micro-SD cards, memory sticks, electrical signals, and others.

In the drawings, specific arrangements or orderings of schematic elements, such as those representing devices, modules, instruction blocks and data elements, may be shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

In general, schematic elements used to represent instruction blocks may be implemented using any suitable form of machine-readable instruction, such as software or firmware applications, programs, functions, modules, routines, processes, procedures, plug-ins, applets, widgets, code fragments and/or others, and that each such instruction may be implemented using any suitable programming language, library, application programming interface (API), and/or other software development tools. For example, some embodiments may be implemented using Java, C++, and/or other programming languages. Similarly, schematic elements used to represent data or information may be implemented using any suitable electronic arrangement or structure, such as a register, data store, table, record, array, index, hash, map, tree, list, graph, file (of any file type), folder, directory, database, and/or others.

Further, in the drawings, where connecting elements, such as solid or dashed lines or arrows, are used to illustrate a connection, relationship or association between or among two or more other schematic elements, the absence of any such connecting elements is not meant to imply that no connection, relationship or association can exist. In other words, some connections, relationships or associations between elements may not be shown in the drawings so as not to obscure the disclosure. In addition, for ease of illustration, a single connecting element may be used to represent multiple connections, relationships or associations between elements. For example, where a connecting element represents a communication of signals, data or instructions, it should be understood by those skilled in the art that such element may represent one or multiple signal paths (e.g., a bus), as may be needed, to effect the communication.

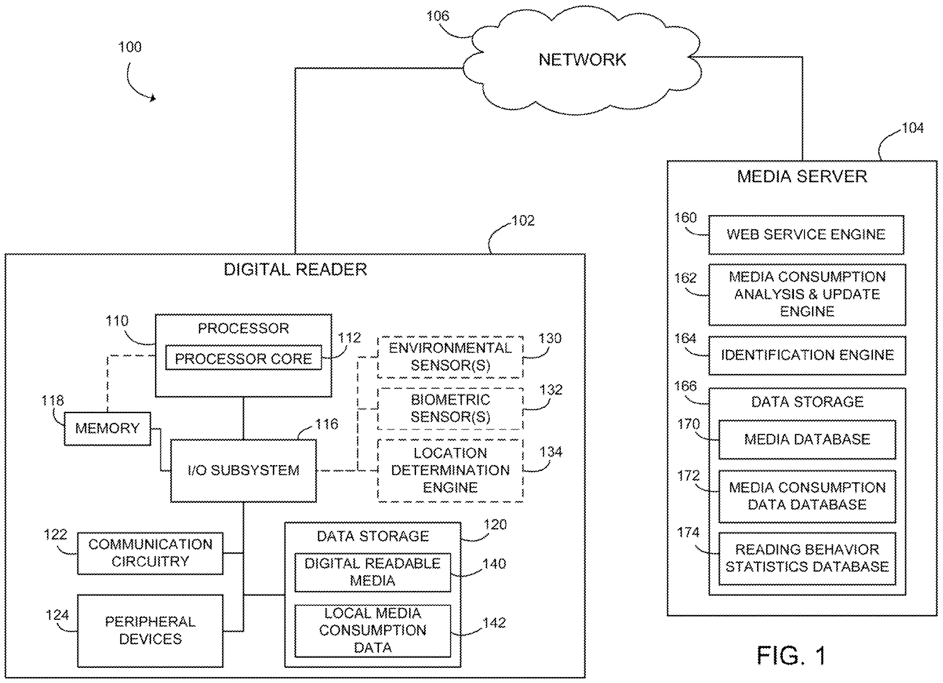

Referring now to FIG. 1, a system 100 for generating and analyzing digital readable media consumption data includes a digital reader 102, a media server 104, and a network 106. A user may operate the digital reader 102 to retrieve digital readable media from the media server 104. The user may subsequently consume (i.e., read) the digital readable media on the digital reader 102. While the user is consuming the digital readable media, the digital reader 102 is configured to generate media consumption data. The media consumption data may be embodied as any type of data indicative of the user's reading behavior with regard to the digital readable media. For example, the media consumption data may be embodied as or otherwise include an indication of the amount of media consumed by the reader over a period of time (e.g., the number of lines read per minute, the number of pages read per hour, the time spent reading each page, the time spent reading each chapter, etc.).

Additionally, the media consumption data may indicate the user's behavior with regard to particular sections of the digital readable media (e.g., did the user read past the chapter ending, did the user reread a chapter, section, or page). Further, in some embodiments, the consumption data may include environmental data, biometric data, and/or location data. The environmental data may be indicative of one or more environmental conditions in which the user consumed the digital readable media (e.g., the altitude, temperature, atmospheric condition, or level of surrounding noise of the local environment in which the user consumed the digital readable media). Such environmental data may be generated as a function of the particular time and/or date at which the user consumed the digital readable media (e.g., whether the user was reading during daylight hours, reading at night, reading during the Summer vs. Winter seasons, reading near significant dates or time of the year such as Independence Day, Christmas, Ramadan, Black History Month, etc.). Similarly, the biometric data may be indicative of one or more biometric conditions of the user while the user read the digital readable media (e.g., the user's galvanic skin response, a facial reaction of the user, the amount of the user's pupil dilation, the user's pulse rate variations, the user's variation in breathing rate or depth, the user's brain activity, or the movement of the user's eyes while the user read the digital readable media). Additionally, the location data may be indicative of the location at which the user read the digital readable media (e.g., the user's home, library, gym, etc.).

As discussed in more detail below, the digital reader 102 is configured to communicate periodically or responsively the media consumption data to the media server 104 over the network 106. The media server 104 generates reading behavior statistics for the user and the particular digital readable media based on the media consumption data. Such reading behavior statistics may correlate directly to the media consumption data (e.g., the consumption rate of the digital readable media, the location at which the digital. readable media was consumed, whether the reader stopped reading the digital media at some particular section or point, etc.) or may be determined or generated based thereon (e.g., the digital readable media may be classified as a "page turner" or a "quick read" or to be determined to have a "sagging middle" based on the consumption rate included in the media consumption data). As such, the user may compare his/her reading behavior statistics to other readers (e.g., "how quickly did I read the digital book relative to other readers").

Additionally, the media server 104 may identify additional digital readable media based on the user's reading behavior statistics and/or aggregate reading behavior statistics related to the identified digital readable media. The additional digital readable media may be presented to the user as a recommendation, advertisement, ranking, or list of digital readable media. To do so, the media server 104 aggregates the reading behavior of a large pool of readers for each digital readable media and associates the aggregate reading behavior statistics with the digital readable media such that the digital readable media may be recommended to or identified for users having similar reading behaviors or desiring digital readable media having such associated reading behavior statistics. For example, if the reading behavior of the user indicates that the user is a quick reader, the media server 104 may recommend digital readable media that has aggregate reading behavior statistics that indicates the particular digital readable media is a quick read. Alternatively, the user may simply request recommendations based on a supplied or selected reading behavior statistic (e.g., "digital readable media that is a quick read," "digital readable media with cliff hangers," "digital readable media that is typically read during the winter," "digital readable media that is typically read while flying," and so forth).

The digital reader 102 may be embodied as any type of computing device for reading digital readable media. For example, the digital reader 102 may be embodied as a computing tablet/reader, a laptop, a mobile internet device (MID), a handheld computer, a smart phone, a personal digital assistant, an audio book reader (e.g., a device that reads a digital book or replays a reading of the book to the user), or other computing device on which digital readable media may be consumed. In the illustrative embodiment of FIG. 1, the digital reader 102 includes a processor 110, an I/O subsystem 116, a memory 118, a data storage 120, a communication circuitry 122, and one or more peripheral devices 124. In some embodiments, several of the foregoing components may be incorporated on a motherboard of the digital reader 102, while other components may be communicatively coupled to the motherboard via, for example, a peripheral port. Furthermore, it should be appreciated that the digital reader 102 may include other components, sub-components, and devices commonly found in a digital reader, which are not illustrated in FIG. 1 for clarity of the description.

The processor 110 of the digital reader 102 may be embodied as any type of processor capable of executing software/firmware, such as a microprocessor, digital signal processor, microcontroller, or the like. The processor 110 is illustratively embodied as a single core processor having a processor core 112. However, in other embodiments, the processor 110 may be embodied as a multi-core processor having multiple processor cores 112. Additionally, the digital reader 102 may include additional processors 110 having one or more processor cores 112.

The I/O subsystem 116 of the digital reader 102 may be embodied as circuitry and/or components to facilitate input/output operations with the processor 110 and/or other components of the digital reader 102. In some embodiments, the I/O subsystem 116 may be embodied as a memory controller hub (MCH or "northbridge"), an input/output controller hub (ICH or "southbridge"), and a firmware device. In such embodiments, the firmware device of the I/O subsystem 116 may be embodied as a memory device for storing Basic Input/Output System (BIOS) data and/or instructions and/or other information (e.g., a BIOS driver used during booting of the digital reader 102). However, in other embodiments, I/O subsystems having other configurations may be used. For example, in some embodiments, the I/O subsystem 116 may be embodied as a platform controller hub (PCH). In such embodiments, the memory controller hub (MCH) may be incorporated in or otherwise associated with the processor 110, and the processor 110 may communicate directly with the memory 118 (as shown by the hashed line in FIG. 1). Additionally, in other embodiments, the I/O subsystem 116 may form a portion of a system-on-a-chip (SoC) and be incorporated, along with the processor 110 and other components of the digital reader 102, on a single integrated circuit chip.

The processor 110 is communicatively coupled to the I/O subsystem 116 via a number of signal paths. These signal paths (and other signal paths illustrated in FIG. 1) may be embodied as any type of signal paths capable of facilitating communication between the components of the digital reader 102. For example, the signal paths may be embodied as any number of wires, cables, light guides, printed circuit board traces, via, bus, intervening devices, point-to-point interconnects, and/or the like.

The memory 118 of the digital reader 102 may be embodied as, or otherwise include, one or more memory devices or data storage locations including, for example, dynamic random access memory devices (DRAM), synchronous dynamic random access memory devices (SDRAM), double-data rate synchronous dynamic random access memory device (DDR SDRAM), mask read-only memory (ROM) devices, erasable programmable ROM (EPROM), electrically erasable programmable ROM (EEPROM) devices, flash memory devices, and/or other volatile and/or non-volatile memory devices. The memory 118 is communicatively coupled to the I/O subsystem 116 via a number of signal paths. Although only a single memory device 118 is illustrated in FIG. 1, the digital reader 102 may include additional memory devices in other embodiments. Various data and software may be stored in the memory device 118. For example, one or more operating systems, applications, programs, libraries, and drivers that make up the software stack executed by the processor 110 may reside in memory 118 during execution.

The data storage 120 may be embodied as any type of device or devices configured for the short-term or long-term storage of data such as, for example, memory devices and circuits, memory cards, hard disk drives, solid-state drives, or other data storage devices. The digital readable media 140 is stored in the data storage 120. It should be appreciated that the data storage 120 may store a plurality of digital readable media (e.g., several digital books) at any time. Additionally, the media consumption data 142 generated by the digital reader 102 is stored in the data storage 120. In some embodiments, the media consumption data 142 may be stored in an encrypted form on the digital reader 102.

The communication circuitry 122 of the digital reader 102 may be embodied as any number of devices and circuitry for enabling communications between the digital reader 102 and the media server 104 over the network 106. The network 106 may be embodied as any number of various wired and/or wireless communication networks. For example, the network 106 may be embodied as or otherwise include a local area network (LAN), a wide area network (WAN), or a publicly-accessible, global network such as the Internet. Additionally, the network 106 may include any number of additional devices to facilitate communication between the digital reader 102 and the media server 104. The digital reader 102 and the media server 104 may use any suitable communication protocol to communicate with each other over the network 106 depending on, for example, the particular type of network(s) 106.

The peripheral devices 124 of the digital reader 102 may include any number of additional input/output devices, interface devices, and/or other peripheral devices. For example, the peripheral devices 124 may include a display for displaying the digital readable media 140 to the user, a keyboard, mouse, or other input/output peripheral device. The peripheral devices 124 are communicatively coupled to the I/O subsystem 116 via a number of signal paths thereby allowing the I/O subsystem 116 and/or processor 110 to receive inputs from and send outputs to the peripheral devices 124.

In some embodiments, the digital reader 102 may also include one or more environmental sensors 130 to sense environmental conditions of the local environment in which the user reads the digital readable media 140. The environmental sensors 130 may be embodied as any type of environmental sensors configured to measure or sense any type of environmental condition. For example, the environmental sensors 130 may be embodied as or otherwise include an altitude sensor to generate environmental data indicative of an altitude at which the user is reading the digital readable media 140, a temperature sensor to generate environmental data indicative of a temperature of the local environment in which the user is reading the digital readable media 140, an atmospheric condition sensor (and/or access to a network-based weather service) to generate environmental data indicative of an atmospheric condition (e.g., snowing, raining, etc.) of the local environment in which the user is reading the digital readable media 140, a video camera to generate and analyze images of the local environment of the user while reading the digital readable media 140, and/or a microphone or other audible sensor to generate environmental data indicative of the surrounding noise of the local environment (e.g., the level of the noise floor of the local environment) in which the user is reading the digital readable media 140.

The digital reader 102 may also include one or more biometric sensors 132 to sense a biometric condition of the user of the digital reader 102 while the user is reading the digital readable media 140. The biometric sensors 132 may be embodied as any type of biometric sensors configured to measure or sense any type of biometric condition of the user. For example, the biometric sensors may be embodied as or otherwise include a galvanic skin response sensor to generate biometric data indicative of a galvanic skin response of the user while reading the digital readable media 140 and/or a video camera to generate biometric data indicative of the user's facial reactions, an amount of pupil dilation of the user's eyes, or the movement of the user's eyes while reading the digital media.

Additionally, in some embodiments, the digital reader 102 may include a location determination engine 134. The location determination engine 134 is configured to determine and generate location data indicative of the current location of the digital reader 102 (and thereby the user of the digital reader 102) while the user is reading the digital readable media 140. To do so, the location determination engine 134 may include one more location determination devices, such as a global positioning system (GPS) to determine the location of the digital reader 102. Additionally or alternatively, the location determination engine 134 may infer the location of the digital reader 102 based on other data such as a wireless access point to which the digital reader 102 is connected, cellular triangulation, data supplied by the user, and/or any other data from which the digital reader 102 may determine the current location.

The media server 104 may be embodied as any type of data server capable of performing the functions described herein. As such, the media server 104 may include various hardware and software components (e.g., a processor and memory) typically found in a server for communicating, storing, maintaining, and transferring data over a network. The illustrative media server 104 includes a web service engine 160, a media consumption analysis and update engine 162, an identification engine 164, and a data storage 166. The web service engine 160 provides a web portal to the digital reader 102 for various web services including transmitting the local media consumption data 142 to the media server 104 and receiving recommendations of other digital readable media 140 from the media server 104 as discussed in more detail below.

The media consumption analysis and update engine 162 is configured to receive the media consumption data 142 from the digital reader 102, determine reading behavior statistics based on the media consumption data, and update the reading behavior statistics based on the media consumption data. As discussed above, the reading behavior statistics may correlate directly to the media consumption data (e.g., digital readable media consumption rates) or be inferred or determined based thereon (e.g., that the digital readable media is a quick read). In some embodiments, the media consumption analysis and update engine 162 is configured to determine the user's average reading behavior statistics (e.g., the user's average consumption rate of all consumed digital readable media), the user's reading behavior statistics associated with the particular digital readable media (e.g., how quickly did the user read the particular digital readable media), users' aggregate reading behavior statistics, and/or aggregate reading behavior statistic associated with a particular digital readable media.

For example, the media consumption analysis and update engine 162 may determine an overall average speed at which the user consumes digital readable media (e.g., average line per minute, page per hour, or average time spent per page of digital readable media), the reading locations preferred by the user (e.g., the percentage of time during which the user reads digital media at a particular location such as the user's home), and/or other conditions preferred by the user (e.g., the percentage of digital readable media read by the user during a particular season relative to other seasons). Additionally, as discussed above, the media consumption analysis and update engine 162 may determine the user's reading behavior statistics relative to the particular digital readable media such as, for example, the rate at which the user read the particular digital readable media, the reading location the user preferred while reading the particular digital readable media, and/or the environmental conditions (e.g., was it raining or snowing) in which the user read the particular digital readable media, and so forth.

The media consumption analysis and update engine 162 may also determine or update aggregate reading behavior statistics with the user's reading behavior statistics. For example, the media consumption analysis and update engine 162 may determine an aggregate digital media consumption rate based on all users or a subset of users, a ranking of preferred reading locations, a ranking of preferred reading conditions, and so forth. Additionally, the media consumption analysis and update engine 162 may determine or update aggregate reading behavior statistics for the particular digital reading media with the user's reading behavior statistic related to that particular digital reading media. As discussed above, the aggregate reading behaviors statistics associated with a particular digital reading media may be directly correlated to the media consumption data (e.g., the average consumption rate (per line, per page, per chapter, etc.) at which users read the digital media) or may be inferred or determined based on media consumption data (e.g., whether the digital readable media is a "quick read," whether the digital readable media includes cliffhangers, whether the digital readable media is good for a particular season, whether readers found the digital readable media suspenseful, etc.). As such, it should be appreciated that the determined reading behavior statistics may be embodied as any type of data upon which the media server 104 may base a recommendation.

In some embodiments, the media server 104 may be configured to present the user's reading behavior statistics in relation to the aggregate reading behavior statistics of other users or of particular digital readable media. In this way, the user may compare their reading behavior to the reading behavior of other users.

The identification engine 164 is also configured to determine one or more additional digital readable media to present to the user of the digital reader 102. To do so, the identification engine 164 may compare the user's reading behavior statistics with the aggregate reading behavior statistics associated with each digital readable media and recommend those digital readable media having corresponding aggregate reading behavior statistics. Additionally or alternatively, the user may select or supply one or more reading behavior statistics to which the identification engine 164 may compare the aggregate reading behavior statistics associated with each digital readable media. In this way, digital readable media may be identified and/or recommended to the user based on the user's reading behavior.

The data storage 166 may be embodied as any type of long-term storage device such as one or more hard disk drives, solid-state devices, non-volatile memory, and/or other data storage devices typically found in network-based data servers. The data storage 166 includes a media database 170, a media consumption data database 172, and a reading behavior statistics database 174. The media server 104 stores the digital readable media that may be accessed by a user of the digital reader 102 in the media database 170. Such digital readable media may be embodied as any type of digital readable media such as digital books, stories, articles, and/or the like. Additionally, it should be appreciated that the digital readable media may include other media in addition to the readable media, such as pictures, videos, and sound, which supplement the readable media.

The media server 104 also stores the media consumption data received from the users of the digital readers 102 in the media consumption data database 172 and the reading behavior statistics determined by the media consumption analysis and update engine 162 in the reading behavior statistics database 174. Additionally, in some embodiments, the media server 104 may store other data in the data storage 166 that is useful in determining a recommendation of digital readable media to a user such as past purchase history.

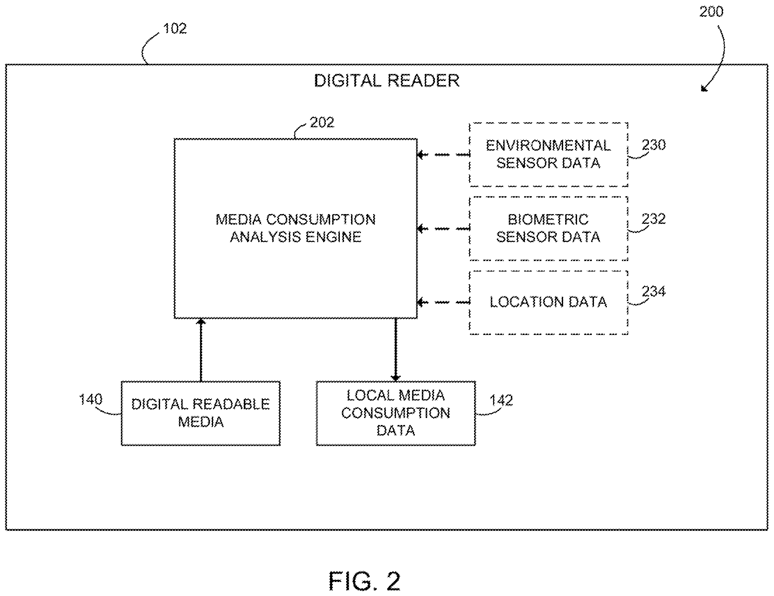

Referring now to FIG. 2, during operation, the digital reader 102 establishes a software environment 200 for generating media consumption data. The illustrative software environment 200 includes a media consumption analysis engine 202 that is configured to monitor the user's consumption of the digital readable media 140. The media consumption analysis engine 202 generates the local media consumption data 142, which is stored in the data storage 120. As discussed above, the media consumption data may be embodied as any type of data indicative of the user's reading behavior of the digital readable media 140. For example, the media consumption data may be embodied as or otherwise include the amount of digital readable media consumed by the reader over a period of time (e.g., the number of lines read per minute, the number of pages read per hour, the time spent reading each page, the time spent reading each chapter, etc.).

In some embodiments, the media consumption analysis engine 202 may be configured to receive environmental sensor data 230 for one or more of the environmental sensors 130, biometric sensor data 232 from one or more of the biometric sensors 132, and/or location data 234 from the location determination engine 134. In such embodiments, the media consumption analysis engine 202 may incorporate the environmental sensor data 230, the biometric sensor data 232, and/or the location data 234 into the media consumption data 142 or otherwise determine a portion of the media consumption data 142 based thereon. The media consumption analysis engine 202 may also be configured to transmit the local media consumption data 142 to the media server 104 as discussed above.

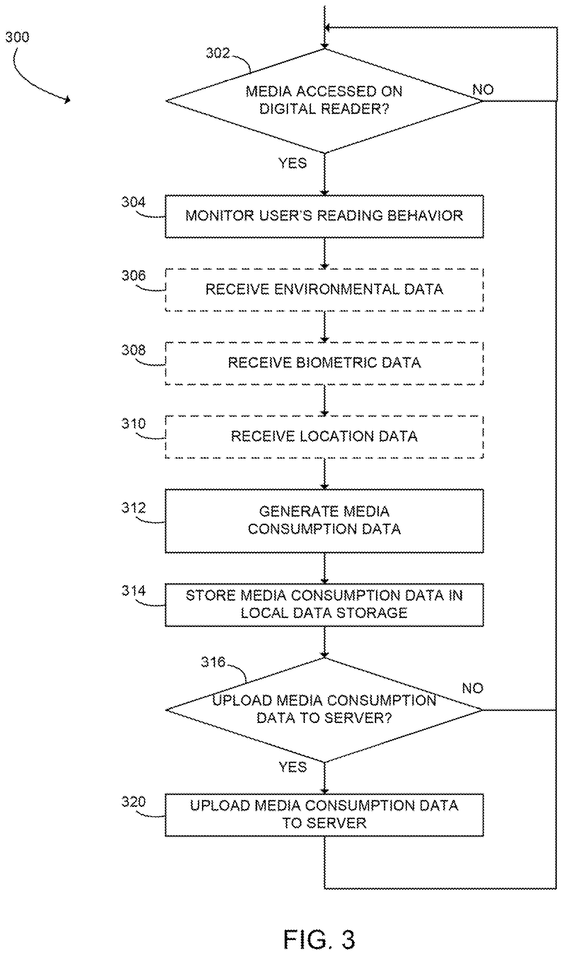

Referring now to FIG. 3, in operation, the digital reader 102 may execute a method 300 for generating media consumption data. The method 300 begins with block 302 in which the digital reader 102 determines whether the user has accessed the digital readable media 140 on the digital reader 102. If not, the method 300 loops back to block 302 to wait for the user's access of media on the digital reader 102. However, if the user has access media on the digital reader 102, the method 300 advances to block 304 in which the digital reader 102 monitors the user's reading behavior. For example, as discussed above, the media consumption analysis engine 202 of the digital reader 102 may monitor the rate at which the user reads the digital readable media 140, which may be embodied as an amount of the digital readable media 140 per unit of time (e.g., lines per minute, paragraphs per hour, pages per hour, chapters per hour, percentage of media per hour, etc.).

As discussed above, in some embodiments, the digital reader 102 may include an environmental sensor 130. If so, the media consumption analysis engine 202 of the digital reader 102 receives, in block 306, the environmental sensor data 230 generated by the environmental sensor 130. As discussed above, the environmental sensor data 230 may be embodied as any type of environmental data indicative of an environmental condition of the local environment in which the user is reading the digital media data. Additionally, if the digital reader 102 includes a biometric sensor 132, media consumption analysis engine 202 of the digital reader 102 receives the biometric sensor data 232 in block 308. As discussed above, the biometric sensor data 232 may be embodied as any type of biometric data indicative of a biometric response of the user while reading the digital readable media 140. Similarly, if the digital reader 102 includes a location determination engine 134, the media consumption analysis engine 202 of the digital reader receives the location data 234 in block 310. The location data may be embodied as any type of data indicative of the location at which the reader is reading the digital reading media.

In block 312, the media consumption analysis engine 202 generates the media consumption data 142 based on the user's reading behavior as monitored in block 304 and/or any environmental data, biometric data, and/or location data received in blocks 306, 308, 310. As discussed above, the media consumption data may be embodied as any type of data indicative of the user's reading behavior of the digital readable media 140, which may include or otherwise be dependent upon user's digital readable media consumption behavior, the environmental data, biometric data, and/or location data. After the media consumption analysis engine 202 generates the media consumption data 142, the media consumption analysis engine 202 stores the media consumption data 142 in the data storage 120.

In block 316, the digital reader 102 determines whether to upload the local media consumption data 142 to the media server 104. If not, the method 300 may locally store the local media consumption data 142 for a later upload and loop back to block 302. However, if the digital reader 102 determines to upload the local media consumption data 142 at the present, the digital reader uploads the local media consumption data 142 to the media server 104 in block 320. To do so, the digital reader 102 may periodically communicate with the media server 104 to transfer the media consumption data 142 in. Alternatively, the digital reader 102 may transfer the media consumption data 142 in response to one or more criteria such as the amount of media consumption data 142 stored on the digital reader 102, selection by the user to transfer the media consumption data 142, and/or the like. After uploading the local media consumption data 142, the method 300 loops back to block 302 in which the digital reader 102 determines whether the user has again accessed the digital readable media 140 or other digital readable media stored on the digital reader 102.

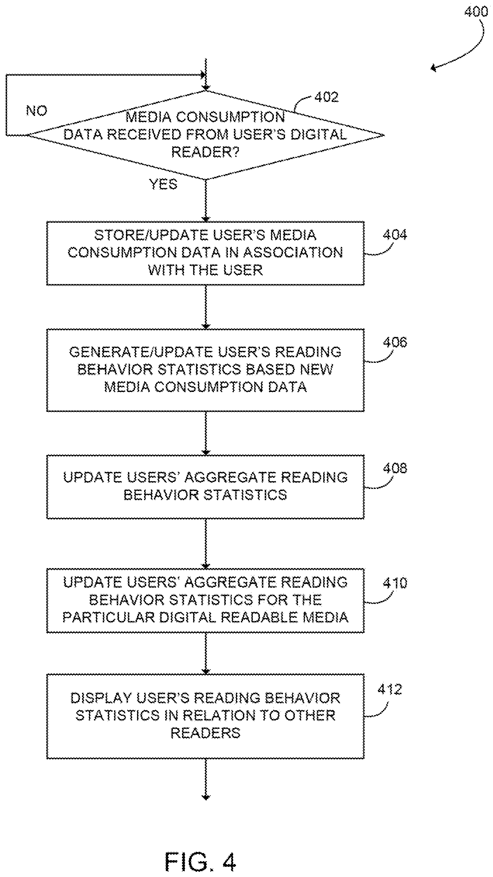

Referring now to FIG. 4, the media server 104 maintains the reading behavior statistics of users and the reading behavior statistics associated with the digital readable media available from the server 104. To do so, the media server 104 may execute a method 400 for updating reading behavior statistics. The method begins with block 402 in which the media server 104 determines whether media consumption data 142 has been received from the user's digital reader 102. If not, the method 400 loops back to block 402 to await the upload of media consumption data 142. However, if so, in block 404, the media consumption analysis and update engine 162 of the media server 104 stores (if the user is a new user) or updates (if the user is an existing user) the media consumption data 142 in the media consumption data database 172 of the data storage 166. The media consumption data 142 is stored in association with the user (e.g., via identifying data) such that the media consumption data 142 may be retrieved and analyzed at a later date.

In block 406, the media consumption analysis and update engine 162 generates or otherwise updates the user's reading behavior statistics based on the new media consumption data 142. The user's reading behavior statistics may be stored in the reading behavior statistics database 174 of the data storage 166 in association with the user. As discussed above, the user's reading behavior statistics may include the user's averaged reading behavior statistics (e.g., the user's average consumption rate of all consumed digital readable media) and/or the user's reading behavior statistics associated with the particular digital readable media 140 (e.g., how quickly did the user read the particular digital readable media). Additionally, the reading behavior statistics may correlate directly to the media consumption data (e.g., digital readable media consumption rates) or be inferred or determined based thereon (e.g., that the user prefers digital readable media that are "quick reads").

In block 408, the media consumption analysis and update engine 162 updates the users' aggregate reading behavior statistics with the user's reading behavior statistics, which is stored in the reading behavior statistics database 174. As discussed above, the users' aggregate reading behavior statistics may be based on the global pool of all users and/or a subset of all users and provides a "snap shot" of the general reading behavior of the users without relation to any particular digital reading media. For example, the user's aggregate reading behavior statistics may include an aggregate digital media consumption rate, a ranking of preferred reading locations, a ranking of preferred reading conditions, and so forth.

In block 410, the media consumption analysis and update engine 162 also updates the users' aggregate reading behavior statistics for the particular digital readable media 140 with the relevant user's reading behavior statistics determined in block 406. As discussed above, the aggregate reading behavior statistics associated with a particular digital reading media may be directly correlated to the media consumption data (e.g., the average consumption rate (per line, per page, per chapter, etc.) at which users' read the digital media) or may be inferred or determined based on media consumption data (e.g., whether the digital readable media is a "quick read," whether the digital readable media includes cliffhangers, whether the digital readable media is good for a particular season, whether readers found the digital readable media suspenseful, etc.).

In some embodiments, the media server 104 may transfer the user's newly generated reading behavior statistics to the digital reader 102 for presentation to the user in block 412. For example, the media server 104 may present the user's reading behavior statistics in relation to the aggregate reading behavior statistics of other users or of the particular digital readable media 140 (e.g., the rate at which or the time spent by other users reading the digital readable media 140). In this way, the user of the digital reader 102 may compare their determined reading behavior to other users.

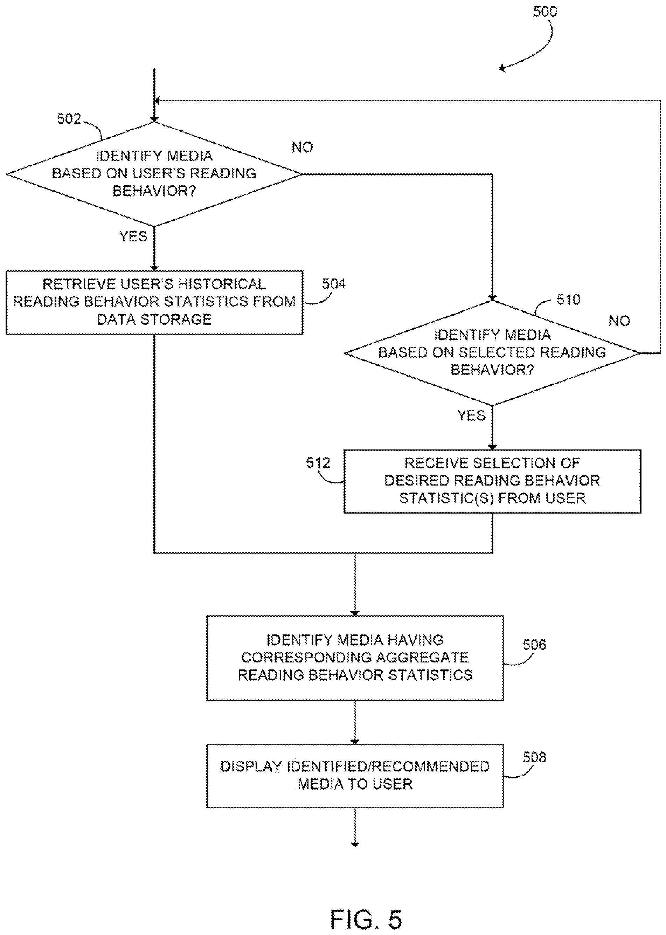

Referring now to FIG. 5, the media server 104 is also configured to provide a recommendation, advertisement, ranking, and/or list of digital readable media to the user based on the user's reading behavior and/or users' aggregate reading behavior relative to the various digital readable media. To do so, the media server 104 may execute a method 500 for recommending digital readable media. The method 500 begins with block 502 in which the media server 104 determines whether to identify and/or recommend media based on the user's reading behavior. For example, when a user accesses the media server 104, the server 104 may be configured to display automatically recommendations, advertisements, rankings, lists, and/or offers for digital readable media based on the user's reading behavior as determined using the method 400 described above with regard to FIG. 4.

If the media server 104 determines to recommend digital readable media based on the user's reading behavior, the method 500 advances to block 504 in which the identification engine 164 retrieves the user's historical reading behavior statistics from the reading behavior statistics database 174 of the data storage 166. In block 506, the identification engine 164 identifies the digital readable media stored in the media database 170 having aggregate reading behavior statistics associated therewith that correspond to the user's historical reading behavior statistics. To do so, the identification engine 164 may compare the user's reading behavior statistics to the aggregate reading behavior statistics of the digital readable media. Digital readable media having aggregate reading behavior statistics that match, within a reference threshold, the user's reading behavior statistics may be determined to be candidates to recommend to the user. As such, in block 508, the media server 104 transmits indicia of the identified digital readable media (e.g., pictures, synopses, excerpts, etc.) to the digital reader 102 for presentation to the user as recommendations in block 508. The user may then review the recommendations and make a selection of the recommended digital readable media.

Referring back to block 502, if the media server 104 determines not to identify or otherwise recommend the digital readable media based on the user's historical reading behavior, the method 500 advances to block 510 in which the media server 104 determines whether to identify and/or recommend the digital readable media based on reading behavior selected by the user. For example, the user may select from a menu, drop-down bar, or the like various reading behaviors or may simply enter the desired reading behavior associated with the digital readable media (e.g., "books that are quick reads," "books that include cliff hangers," "books that users read in the winter," "books that users found engaging," etc.). If so, the user's selection of the desired reading behavior statistic(s) is received by the identification engine in block 512 and the method 500 advances to block 506 in which the identification engine 164 identifies the digital readable media stored in the media database 170 having aggregate reading behavior statistics associated therewith that correspond to the user's selected reading behavior statistics. The media server 104 subsequently transmits the recommendations to the digital reader 102 for presentation to the user in block 508 as discussed above.

It should be appreciated that the media server 104 provides recommendations and/or identifies one or more digital readable media for the user based on the user's reading behavior and/or other user's reading behaviors with respect to the recommended digital readable media.

As such, the recommendations or lists do not rely (at least not solely) on reviews from other users, content of the digital readable media, or the like. Although the invention has been explained in relation to its preferred embodiment(s) as mentioned above, it is to be understood that many other possible modifications and variations can be made without departing from the scope of the present invention, which is defined by the claims.

## Claims

1. A digital reader (102) comprising:
a data storage having stored therein digital readable media;
a processor (110); and
a memory (118) having stored therein a plurality of instructions that, in response to being executed by the processor, results in the processor:
monitoring the user's reading behavior of the digital readable media on the digital reader;
generating media consumption data indicative of a user's rate of consumption of the digital media;
transmitting the media consumption data to a media server over a network; and receiving an identification of other digital readable media from the media server as a function of the media consumption data; **characterised by** further comprising an environmental sensor (130) to generate environmental data (230) indicative of an environment condition in which the user is reading the digital media, and wherein the media consumption data comprises the environmental data;
the environmental sensor comprises an environmental sensor operative to generate environmental data indicative of at least one of:
an altitude at which the user is reading the digital readable media,
a temperature of the local environment in which the user is reading the digital readable media,
an atmospheric condition of the local environment in which the user is reading the digital readable media,
the surrounding noise of the local environment in which the user is reading the digital readable media, and
the visual scene of the local environment in which the user is reading the digital readable media.

2. The digital reader of claim 1, wherein monitoring a user's reading behavior comprises monitoring the amount of digital readable media consumed by the user over a period time.

3. The digital reader of claim 1, wherein generating media consumption data comprises determining a start time indicative of the time at which the user started reading the digital readable media and an end time indicative of the time at which the user stopped reading the digital readable media.

4. The digital reader of claim 1, wherein the user's rate of consumption comprises a unit of the digital readable media read by the user a per unit of time.

5. The digital reader of claim 1, wherein generating media consumption data comprises determining at least one of the day, a time of day, the month, and the season during which the reader is reading the digital media.

6. The digital reader of any of claims 1-5, further comprising a biometric sensor (132) to generate biometric data (232) of the user while the user is reading the digital media,
wherein the media consumption data comprises the biometric data.

7. The digital reader of any of claims 1-5, wherein execution of the plurality of instructions further result in the processor receiving an identification of another digital readable media that has an aggregate reading behavior statistic corresponding to a historical reading behavior statistic of the user.

8. A method (300) comprising:
accessing (302) digital readable media on a digital reader;
monitoring (304), on the digital reader, a user's reading behavior of the digital readable media;
generating (312), on the digital reader, media consumption data indicative of the user's reading behavior of the digital readable media;
transmitting (320), by the digital reader, the media consumption data to a media server over a network; and
receiving, with the digital reader, an identification of other digital readable media from the media server as a function of the media consumption data; **characterised in that**
generating media consumption data comprises receiving (306) environmental data from an environmental sensor of the digital reader, the media consumption data comprising the environmental data; and
receiving environmental data comprises receiving environmental data indicative of at least one of an altitude at which the user is reading the digital readable media, a temperature of the local environment in which the user is reading the digital readable media, an atmospheric condition of the local environment in which the user is reading the digital readable media, the surrounding noise of the local environment in which the user is reading the digital readable media, and the visual scene of the local environment in which the user is reading the digital readable media.

9. The method of claim 8, wherein monitoring a user's reading behavior comprises monitoring the amount of digital readable media consumed by the user over a period time.

10. The method of claim 8, wherein generating media consumption data comprises determining a start time indicative of the time at which the user started reading the digital readable media and an end time indicative of the time at which the user stopped reading the digital readable media.

11. The method of claim 8, wherein generating media consumption data comprises receiving biometric data of the user from a biometric sensor, the media consumption data comprising the biometric data.

12. The method of claim 8, wherein receiving identification of other digital readable media comprises receiving an identification of another digital readable media that has an aggregate reading behavior statistic corresponding to a historical reading behavior statistic of the user.

13. One or more machine-readable storage media comprising a plurality of instructions stored therein that, in response to execution by a computing device, causes the computing device to perform the method of any of claims 8-12.

## Patentansprüche

1. Digitales Lesegerät (102), umfassend:
einen Datenspeicher, in dem digital lesbare Medien gespeichert sind;
einen Prozessor (110); und
einen Speicher (118) mit einer darin gespeicherten Vielzahl von Anweisungen, die in Reaktion auf das Ausführen durch den Prozessor dazu führen, dass der Prozessor Folgendes vornimmt:
Überwachen des Leseverhaltens des Benutzers bezüglich der digital lesbaren Medien auf dem digitalen Lesegerät;
Erzeugen von Medienverbrauchsdaten, welche die Verbrauchsrate der digitalen Medien eines Benutzers anzeigen;
Übertragen der Medienverbrauchsdaten an einen Medienserver über ein Netzwerk;
und Empfangen einer Identifizierung anderer digital lesbarer Medien von dem Medienserver als eine Funktion der Medienverbrauchsdaten; **dadurch gekennzeichnet, dass** es ferner umfasst:
einen Umgebungssensor (130) zum Erzeugen von Umgebungsdaten (230), die eine Umgebungsbedingung anzeigen, in welcher der Benutzer die digitalen Medien liest, und wobei die Medienverbrauchsdaten die Umgebungsdaten umfassen;
wobei der Umgebungssensor einen Umgebungssensor umfasst, der betreibbar ist, um Umgebungsdaten zu erzeugen, die mindestens eines der Folgenden anzeigen:
eine Höhenlage, in der der Benutzer die digital lesbaren Medien liest,
eine Temperatur der lokalen Umgebung, in der der Benutzer die digital lesbaren Medien liest,
eine atmosphärische Bedingung der lokalen Umgebung, in der der Benutzer die digital lesbaren Medien liest,
das Umgebungsgeräusch der lokalen Umgebung, in der der Benutzer die digital lesbaren Medien liest, und
die visuelle Szene der lokalen Umgebung, in der der Benutzer die digital lesbaren Medien liest.

2. Digitales Lesegerät nach Anspruch 1, wobei das Überwachen des Leseverhaltens eines Benutzers das Überwachen der Menge der digital lesbaren Medien umfasst, die der Benutzer über einen Zeitraum verbraucht hat.

3. Digitales Lesegerät nach Anspruch 1, wobei das Erzeugen von Medienverbrauchsdaten das Bestimmen einer Startzeit, welche die Zeit anzeigt, zu der der Benutzer das Lesen der digital lesbaren Medien begonnen hat, und einer Endzeit, welche die Zeit anzeigt, zu der der Benutzer das Lesen der digital lesbaren Medien beendet hat, umfasst.

4. Digitales Lesegerät nach Anspruch 1, wobei die Verbrauchsrate des Benutzers eine Einheit der von dem Benutzer gelesenen digital lesbaren Medien pro Zeiteinheit umfasst.

5. Digitales Lesegerät nach Anspruch 1, wobei das Erzeugen von Medienverbrauchsdaten das Bestimmen von mindestens einem Tag, einer Tageszeit, dem Monat und der Jahreszeit umfasst, während denen der Leser die digitalen Medien liest.

6. Digitales Lesegerät nach einem der Ansprüche 1 bis 5, ferner umfassend einen biometrischen Sensor (132) zum Erzeugen biometrischer Daten (232) des Benutzers, während der Benutzer die digitalen Medien liest,
wobei die Medienverbrauchsdaten die biometrischen Daten umfassen.

7. Digitales Lesegerät nach einem der Ansprüche 1 bis 5, wobei das Ausführen der Vielzahl von Anweisungen ferner dazu führt, dass der Prozessor eine Identifizierung anderer digital lesbarer Medien empfängt, die eine aggregierte Leseverhaltensstatistik aufweist, die einer historischen Leseverhaltensstatistik des Benutzers entspricht.

8. Verfahren (300), umfassend:
Zugreifen (302) auf digital lesbare Medien auf einem digitalen Lesegerät;
Überwachen (304), auf dem digitalen Lesegerät, des Leseverhaltens des Benutzers bezüglich der digital lesbaren Medien;
Erzeugen (312), auf dem digitalen Lesegerät, von Medienverbrauchsdaten, die das Leseverhalten des Benutzers bezüglich der digital lesbaren Medien anzeigen;
Übertragen (320), durch das digitale Lesegerät, der Medienverbrauchsdaten an einen Medienserver über ein Netzwerk; und
Empfangen, mit dem digitalen Lesegerät, einer Identifizierung anderer digital lesbarer Medien von dem Medienserver als eine Funktion der Medienverbrauchsdaten; **dadurch gekennzeichnet, dass**
das Erzeugen von Medienverbrauchsdaten das Empfangen (306) von Umgebungsdaten von einem Umgebungssensor des digitalen Lesegeräts umfasst, wobei die Medienverbrauchsdaten die Umgebungsdaten umfassen; und
das Empfangen von Umgebungsdaten das Empfangen von Umgebungsdaten umfasst, die mindestens eine von einer Höhenlage, in der der Benutzer die digital lesbaren Medien liest, einer Temperatur der lokalen Umgebung, in der der Benutzer die digital lesbaren Medien liest, einer atmosphärischen Bedingung der lokalen Umgebung, in der der Benutzer die digital lesbaren Medien liest, der Umgebungsgeräusche der lokalen Umgebung, in der der Benutzer die digital lesbaren Medien liest, und der visuellen Szene der lokalen Umgebung, in der der Benutzer die digital lesbaren Medien liest, anzeigen.

9. Verfahren nach Anspruch 8, wobei das Überwachen des Leseverhaltens eines Benutzers das Überwachen der Menge der digital lesbaren Medien umfasst, die der Benutzer über einen Zeitraum verbraucht hat.

10. Verfahren nach Anspruch 8, wobei das Erzeugen von Medienverbrauchsdaten das Bestimmen einer Startzeit, welche die Zeit anzeigt, zu der der Benutzer das Lesen der digital lesbaren Medien begonnen hat, und einer Endzeit, welche die Zeit anzeigt, zu der der Benutzer das Lesen der digital lesbaren Medien beendet hat, umfasst.

11. Verfahren nach Anspruch 8, wobei das Erzeugen von Medienverbrauchsdaten das Empfangen biometrischer Daten des Benutzers von einem biometrischen Sensor umfasst, wobei die Medienverbrauchsdaten die biometrischen Daten umfassen.

12. Verfahren nach Anspruch 8, wobei das Empfangen der Identifizierung anderer digital lesbarer Medien das Empfangen einer Identifizierung anderer digital lesbarer Medien umfasst, die eine aggregierte Leseverhaltensstatistik aufweist, die einer historischen Leseverhaltensstatistik des Benutzers entspricht.

13. Eines oder mehrere maschinenlesbare Speichermedien, die eine Vielzahl von darin gespeicherten Anweisungen umfassen, die in Reaktion auf das Ausführen durch ein Computergerät das Computergerät veranlassen, das Verfahren nach einem der Ansprüche 8 bis 12 durchzuführen.

## Revendications

1. Liseuse numérique (102), comprenant :
un dispositif de stockage de données dans lequel est stocké un contenu multimédia numérique lisible ;
un processeur (110) ; et
une mémoire (118) dans laquelle est stockée une pluralité d'instructions qui, en réponse à leur exécution par le processeur, amènent le processeur à :
surveiller, sur la liseuse numérique, le comportement de lecture de l'utilisateur du contenu multimédia numérique lisible ;
générer des données de consommation de contenu multimédia indiquant un taux de consommation du contenu multimédia numérique de l'utilisateur ;
transmettre les données de consommation de contenu multimédia à un serveur multimédia sur un réseau ; et
recevoir une identification d'un autre contenu multimédia numérique lisible en provenance du serveur multimédia en fonction des données de consommation de contenu multimédia ;
la liseuse numérique étant **caractérisée en ce qu'**elle comprend en outre :
un capteur environnemental (130) destiné à générer des données environnementales (230) indiquant une condition environnementale dans laquelle l'utilisateur est en train de lire le contenu multimédia numérique, les données environnementales étant comprises dans les données de consommation de contenu multimédia ;
le capteur environnemental consistant en un capteur environnemental capable de générer des données environnementales indiquant au moins un paramètre parmi :
une altitude à laquelle l'utilisateur est en train de lire le contenu multimédia numérique lisible,
une température de l'environnement local dans lequel l'utilisateur est en train de lire le contenu multimédia numérique lisible,
une condition atmosphérique de l'environnement local dans lequel l'utilisateur est en train de lire le contenu multimédia numérique lisible,
le bruit ambiant de l'environnement local dans lequel l'utilisateur est en train de lire le contenu multimédia numérique lisible, et
la scène visuelle de l'environnement local dans lequel l'utilisateur est en train de lire le contenu multimédia numérique lisible.

2. Liseuse numérique selon la revendication 1, dans laquelle la surveillance d'un comportement de lecture de l'utilisateur consiste à surveiller la quantité de contenu multimédia numérique lisible consommée par l'utilisateur pendant une période de temps.

3. Liseuse numérique selon la revendication 1, dans laquelle la génération de données de consommation de contenu multimédia consiste à déterminer une heure de début indiquant l'heure à laquelle l'utilisateur a commencé à lire le contenu multimédia numérique lisible, et une heure de fin indiquant l'heure à laquelle l'utilisateur a arrêté de lire le contenu multimédia numérique lisible.

4. Liseuse numérique selon la revendication 1, dans laquelle le taux de consommation de l'utilisateur comprend une unité du contenu multimédia numérique lisible lu par l'utilisateur par unité de temps.

5. Liseuse numérique selon la revendication 1, dans laquelle la génération de données de consommation de contenu multimédia consiste à déterminer au moins le jour, l'heure du jour, le mois et la saison où le lecteur est en train de lire le contenu multimédia numérique.

6. Liseuse numérique selon l'une quelconque des revendications 1 à 5, comprenant en outre un capteur biométrique (132) destiné à générer des données biométriques (232) de l'utilisateur pendant que l'utilisateur est en train de lire le contenu multimédia numérique,
les données biométriques étant comprises dans les données de consommation de contenu multimédia.

7. Liseuse numérique selon l'une quelconque des revendications 1 à 5, dans laquelle l'exécution de la pluralité d'instructions amène en outre le processeur à recevoir une identification d'un autre contenu multimédia numérique lisible qui comporte une statistique agrégée de comportement de lecture correspondant à une statistique historique de comportement de lecture de l'utilisateur.

8. Procédé (300), consistant à :
accéder (302) à un contenu multimédia numérique lisible sur une liseuse numérique ;
surveiller (304), sur la liseuse numérique, le comportement de lecture d'un utilisateur du contenu multimédia numérique ;
générer (312), sur la liseuse numérique, des données de consommation de contenu multimédia indiquant le comportement de lecture de l'utilisateur du contenu multimédia numérique ;
transmettre (320), par la liseuse numérique, les données de consommation de contenu multimédia à un serveur multimédia sur un réseau ; et
recevoir, avec la liseuse numérique, une identification d'un autre contenu multimédia numérique lisible en provenance du serveur multimédia en fonction des données de consommation de contenu multimédia ;
le procédé étant **caractérisé en ce que** :
la génération de données de consommation de contenu multimédia consiste à recevoir (306) des données environnementales en provenance d'un capteur environnemental de la liseuse numérique, les données environnementales étant comprises dans les données de consommation de contenu multimédia ; et
la réception de données environnementales consiste à recevoir des données environnementales indiquant au moins un paramètre parmi une altitude à laquelle l'utilisateur est en train de lire le contenu multimédia numérique lisible, une température de l'environnement local dans lequel l'utilisateur est en train de lire le contenu multimédia numérique lisible, une condition atmosphérique de l'environnement local dans lequel l'utilisateur est en train de lire le contenu multimédia numérique lisible, le bruit ambiant de l'environnement local dans lequel l'utilisateur est en train de lire le contenu multimédia numérique lisible, et la scène visuelle de l'environnement local dans lequel l'utilisateur est en train de lire le contenu multimédia numérique lisible.

9. Procédé selon la revendication 8, dans lequel la surveillance d'un comportement de lecture de l'utilisateur consiste à surveiller la quantité de contenu multimédia numérique lisible consommée par l'utilisateur pendant une période de temps.

10. Procédé selon la revendication 8, dans lequel la génération de données de consommation de contenu multimédia consiste à déterminer une heure de début indiquant l'heure à laquelle l'utilisateur a commencé à lire le contenu multimédia numérique lisible, et une heure de fin indiquant l'heure à laquelle l'utilisateur a arrêté de lire le contenu multimédia numérique lisible.

11. Procédé selon la revendication 8, dans lequel la génération de données de consommation de contenu multimédia consiste à recevoir des données biométriques de l'utilisateur en provenance d'un capteur biométrique, les données biométriques étant comprises dans les données de consommation de contenu multimédia.

12. Procédé selon la revendication 8, dans lequel la réception d'une identification d'un autre contenu multimédia numérique lisible consiste à recevoir une identification d'un autre contenu multimédia numérique lisible qui comporte une statistique agrégée de comportement de lecture correspondant à une statistique historique de comportement de lecture de l'utilisateur.

13. Un ou plusieurs supports de stockage lisibles par machine sur lesquels sont stockées une pluralité d'instructions qui, en réponse à leur exécution par un dispositif informatique, amènent le dispositif informatique à réaliser le procédé selon l'une quelconque des revendications 8 à 12.
